# EUROPEAN PATENT APPLICATION

(11) **EP 3 967 553 A1**
(43) Date of publication of application: **16.03.2022**
(21) Application number: 21195462.3
(22) Date of filing: 08.09.2021
(51) Int. Cl.: B60R 1/00

(54) **VEHICULAR DISPLAY SYSTEM**

(30) Priority: 15.09.2020 JP 2020154279
(71) Applicant: MAZDA MOTOR CORPORATION, Hiroshima 730-8670 (JP)
(72) Inventor: Sugawara, Daichi, Hiroshima, 730-8670 (JP); Murata, Koichi, Hiroshima, 730-8670 (JP); Hori, Erika, Hiroshima, 730-8670 (JP); Ohtsubo, Tomonori, Hiroshima, 730-8670 (JP); Matsuba, Yoshiaki, Hiroshima, 730-8670 (JP)
(74) Representative: von Tietzen und Hennig, Nikolaus

(57) **Abstract**

[Task] To show an image of a surrounding area of a vehicle in a superior visibility mode.

[Solution] A vehicular display system includes: an imaging unit (2) that captures an image of the surrounding area of the vehicle; an image processing unit (3) that converts the image captured by the imaging unit (2) into a view image that is an image of the area seen from a predetermined virtual viewpoint in the cabin; and a display unit (4) that shows the view image generated by the image processing unit (3) . The image processing unit (3) can generate, as the view images, a first view image that is acquired when a first direction is seen from the virtual viewpoint and a second view image that is acquired when a second direction differing from the first direction is seen from the virtual viewpoint. Each of the first view image and the second view image is shown at a horizontal angle of view that corresponds to a stable visual field during gazing.

## Description

### [Technical Field]

The present invention relates to a vehicular display system that is mounted on a vehicle to display an image of a surrounding area of the vehicle.

### [Background Art]

As an example of the above vehicular display system, a vehicular display system disclosed in Patent document 1 below has been known. This vehicular display system in Patent document 1 includes: an imaging unit that acquires an image of an area from a front lateral side to a rear lateral side of the vehicle; a display area processing section that generates an image (a display image) of a specified area extracted from the image captured by the imaging unit; and a display unit that shows the display image generated by the display area processing section. The display area processing section adjusts the area of the display image according to an operation status of the vehicle such that the area of the display image in a case where a specified operation status condition is established (for example, a case where a direction indicator is operated) is larger than the area of the display image in a case where such a condition is not established.

### [Prior Art Documents]

### [Patent documents]

[Patent document 1] JP-A-2019-193031

### [Summary of the Invention]

### [Problem to be solved by the invention]

The area of the display image is changed according to whether the direction indicator or the like is operated. Thus, the vehicular display system in Patent document 1 above has an advantage of capable of providing information on the image with an appropriate range (size) corresponding to the operation status to the driver without a sense of discomfort.

Meanwhile, it cannot be said that the image display by the method as described in Patent document 1 is sufficient in terms of visibility and thus has room for improvement. For example, in Patent document 1, the imaging unit is provided at a position of a front wheel fender in the vehicle, for example, in order to acquire the image of the area from the front lateral side to the rear lateral side of the vehicle, and the display unit shows a part of the captured image (only a portion corresponding to a specified angle of view is taken out) by this imaging unit. However, since such a display image is an image that is seen from a position far away from a driver, there is a possibility that it is difficult for the driver to recognize the image intuitively. In addition, there is a limitation on a range of a visual field within which a person can pay close attention without difficulty. Accordingly, even when the area of the display image is expanded according to the operation status, it is difficult to acquire necessary information from the display image within a limited time. Thus, also in this meaning, it cannot be said that the visibility of the display image is sufficient.

The present invention has been made in view of circumferences as described above and therefore has a purpose of providing a vehicular display system capable of showing an image of a surrounding area of a vehicle in a superior visibility mode.

### [Means for solving the Problem]

In order to solve the above problem, the present invention is a vehicular display system that is mounted on a vehicle to show an image of a surrounding area of a vehicle, and includes: an imaging unit that captures the image of the surrounding area of the vehicle; an image processing unit that converts the image captured by the imaging unit into a view image that is an image of the area seen from a predetermined virtual viewpoint in a cabin; and a display unit that shows the view image generated by the image processing unit. The image processing unit can generate, as the view images, a first view image that is acquired when a first direction is seen from the virtual viewpoint and a second view image that is acquired when a second direction differing from the first direction is seen from the virtual viewpoint. Each of the first view image and the second view image is shown at a horizontal angle of view that corresponds to a stable visual field during gazing (claim 1).

According to the present invention, the first and second view images, which are acquired when the two different directions (the first direction and the second direction) are seen from the virtual viewpoint in the cabin by executing specified image processing on the image captured by the imaging unit. Thus, in each of at least two driving scenes in different moving directions of the vehicle, it is possible to appropriately assist with a driver's driving operation by using the view image. In addition, the horizontal angle of view of each of the first and second view images is set to the angle corresponding to the stable visual field during gazing, and the stable visual field during gazing is a range that the driver can visually recognize without difficulty due to assistance of head movement (cervical movement) with eye movement. Thus, it is possible to provide the driver with necessary and sufficient information for identifying an obstacle around an own vehicle through the first and second view images, and it is also possible to effectively assist with the driver's driving operation by providing such information. For example, in the case where the view image includes the obstacle such as another vehicle or a pedestrian, the driver can promptly identify such an obstacle and can promptly determine information such as a direction and a distance to the obstacle on the basis of a location, size, and the like of the identified obstacle. In this way, it is possible to assist the driver to drive safely in a manner capable of avoiding a collision with the obstacle, and it is also possible to favorably secure safety of the vehicle.

Here, it is generally said that a maximum angle in a horizontal direction (a maximum horizontal angle) of the stable visual field during gazing is 90 degrees. Thus, the horizontal angle of view of each of the first view image and the second view image is preferably set within a range 85 degrees and 95 degrees, preferably to approximately 90 degrees (claim 2).

In addition, it is generally said that a maximum angle in a perpendicular direction (a maximum perpendicular angle) of the stable visual field during gazing is 70 degrees. Thus, a perpendicular angle of view of each of the first view image and the second view image can be set to the same 70 degrees. However, the vehicle consistently moves along a road surface (does not move vertically with respect to the road surface). Thus, it is considered that, even when the perpendicular angle of view of each of the view images is smaller than 70 degrees (and is equal to or larger than 40 degrees), information on the obstacle to watch out, and the like can be provided with no difficulty. From what have been described so far, the perpendicular angle of view of each of the first view image and the second view image is preferably set to be equal to or larger than 40 degrees and equal to or smaller than 70 degrees (claim 3).

Preferably, the image processing unit generates, as the first view image, an image that is acquired when an area behind the vehicle is seen from the virtual viewpoint and, as the second view image, an image that is acquired when an area in front of the vehicle is seen from the virtual viewpoint (claim 4).

With such a configuration, when the image of the surrounding area behind or in front of the vehicle is generated as the first view image or the second view image, it is possible to appropriately show the obstacle, which possibly collides with the own vehicle during reverse travel or forward travel, in respective one of the view images.

In the above configuration, further preferably, the imaging unit includes: a rear camera that captures an image of the area behind the vehicle; a front camera that captures an image of the area in front of the vehicle; a left camera that captures an image of an area on a left side of the vehicle; and a right camera that captures an image of an area on a right side of the vehicle, and the image processing unit generates the first view image on the basis of the images captured by the rear camera, the left camera, and the right camera and generates the second view image on the basis of the images captured by the front camera, the left camera, and the right camera (claim 5).

With such a configuration, it is possible to appropriately acquire image data of the area behind the vehicle and image data of an area obliquely behind the vehicle from the rear camera, the left camera, and the right camera at the time of generating the first view image, and it is possible to appropriately generate the first view image as the image that is acquired when the area behind the vehicle is seen from the virtual viewpoint by executing viewpoint conversion processing and the like while synthesizing the acquired image data.

Similarly, it is possible to appropriately acquire image data of the area in front of the vehicle and image data of an area obliquely in front of the vehicle from the front camera, the left camera, and the right camera at the time of generating the second view image, and it is possible to appropriately generate the second view image as the image that is acquired when the area in front of the vehicle is seen from the virtual viewpoint by executing the viewpoint conversion processing and the like while synthesizing the acquired image data.

Preferably, the virtual viewpoint is set at a position that corresponds to the driver's head in a longitudinal direction and a vertical direction of the vehicle (claim 6).

With such a configuration, it is possible to generate, as the first or second view image, a bird's-eye view image with high visibility (that can easily and intuitively be recognized by the driver) in which the surrounding area behind or in front of the vehicle is seen from a position near actual eye points of the driver. As a result, it is possible to effectively assist with driving by the driver through such a view image.

In the above configuration, further preferably, a vehicle speed sensor, a shift position sensor and a view switch are electrically connected to the image processing unit (3). The vehicle speed sensor is configured to detect a travel speed of the vehicle. The shift position sensor monitors an automatic transmission of the vehicle and detects a shift position of the transmission. In particular, the sensor may detect whether the transmission is shifted in a drive position (D), neutral position (N, reverse position ^{®} or parking position (P). The view switch (SW1) is operable by the driver and offers a possibility to activate/deactivate the display of the view image at the display unit (4). The image processing unit may include a determination unit which communicates which the aforementioned sensors and the switch and determines whether the view image is generated or not.

Further preferably, the display unit automatically shows the first view image when the detected travel speed is equal to or lower a threshold speed and the shift position sensor detected the automatic transmission to be shifted in R-position. In case the detected travel speed is equal to or lower a threshold speed, the shift position sensor detected that the automatic transmission is shifted in D-position and the view switch is operated, in particular turned on, the display unit automatically shows the second view image.

According to a further preferred configuration the image processing unit includes an image extraction section which is configured and adapted to extract the images captured by the cameras within a required range. The range corresponds to the angle of view image, i. e. the horizontal angle of view and/or the perpendicular angle of view. Advantageously, the image extraction section switches the cameras to be used according to whether the vehicle travels forward or backward.

The image conversion section is configured to execute a viewpoint conversion processing while synthesizing the images captured by the cameras and extracted by the image extraction section.

The processing unit may further comprise an icon setting section which is configured to generate and set an own vehicle icon which is afterwards superimposed on the view image generated by the image conversion section. A display control section may be provided and configured to show the view image on the vehicle display unit included the superimposed vehicle icon.

In the above configuration, further preferably the image conversion section is configured to set a projection surface including the vehicle, in particular with a center of the projection surface matching the vehicle center in a plan view.

In the above configuration, further preferably the projection surface is formed by a plane projection surface with a stereoscopic projection surface elevated from the outer circumference of the plane projection surface, and wherein the diameter of the stereoscopic projection surface increases with a specified curvature.

According to a further preferable configuration the image conversion section is further configured to synthesize the images captures by different cameras and to execute the viewpoint conversion processing to project the synthesized image to an area which is part of the projection surface with the virtual viewpoint as the projection center.

The present invention is further directed to a vehicle comprising a vehicular display system according to the present invention.

In addition to the apparatus the invention also includes a method of showing an image of a surrounding area of the vehicle by use of a vehicular display system, in particular by use of the vehicular display system according to the invention. The methods includes the steps of:
capturing an image of the surrounding area of the vehicle by an imaging unit;
converting the image captured by the imaging unit into a view image by an image processing unit, wherein the view image is an image of the area seen from a predetermined virtual viewpoint in a cabin of the vehicle; and
showing the view image generated by the image processing unit by a display unit, wherein
the image processing unit generates, as the view images, a first view image that is acquired when a first direction is seen from the virtual viewpoint and a second view image that is acquired when a second direction differing from the first direction is seen from the virtual viewpoint, and
each of the first view image and the second view image is shown at a horizontal angle of view that corresponds to a stable visual field during gazing.

### [Advantage of the invention]

As it has been described so far, the vehicular display system in the present invention can show the image of the surrounding area around the vehicle in the superior visibility mode.

### [Brief Description of the Drawings]

[Fig. 1] Fig. 1 is a plan view of a vehicle that includes a vehicular display system according to an embodiment of the present invention.
[Fig. 2] Fig. 2 is a perspective view in which a front portion of a cabin in the vehicle is seen from behind.
[Fig. 3] Fig. 3 is a block diagram illustrating a control system of the vehicular display system.
[Fig. 4] Fig. 4 is a side view in which the front portion of the cabin is seen from a side.
[Fig. 5] Fig. 5 is a perspective view illustrating a virtual viewpoint that is set in the cabin and a projection surface that is used when a view image that is seen from the virtual viewpoint is generated.
[Fig. 6] Fig. 6 is a flowchart illustrating contents of control that is executed by an image processing unit during driving of the vehicle.
[Fig. 7] Fig. 7 is a subroutine illustrating details of rear-view image generation/display control that is executed in step S4 of Fig. 6.
[Fig. 8] Fig. 8 is a subroutine illustrating details of front-view image generation/display control that is executed in step S8 of Fig. 6.
[Fig. 9] Fig. 9 includes views illustrating a stable visual field during gazing of a person, in which (a) is a plan view and (b) is a side view.
[Fig. 10] Fig. 10 includes views illustrating a range of image data that is used when the rear-view image is generated, in which (a) is a plan view and (b) is a side view.
[Fig. 11] Fig. 11 includes views illustrating a range of image data that is used when the front-view image is generated, in which (a) is a plan view and (b) is a side view.
[Fig. 12] Fig. 12 includes schematic views for illustrating viewpoint conversion processing, in which (a) illustrates a case where an image of an imaging target, which is farther from the virtual viewpoint than the projection surface, is captured and (b) illustrates a case where an image of an imaging target, which is closer to the virtual viewpoint than the projection surface, is captured.
[Fig. 13] Fig. 13 is a view illustrating an example of the rear-view image.
[Fig. 14] Fig. 14 is a view corresponding to Fig. 13 and illustrating a comparative example in which a horizontal angle of view of the rear-view image is increased.

### [Modes for Carrying Out the Invention]

### (1) Overall Configuration

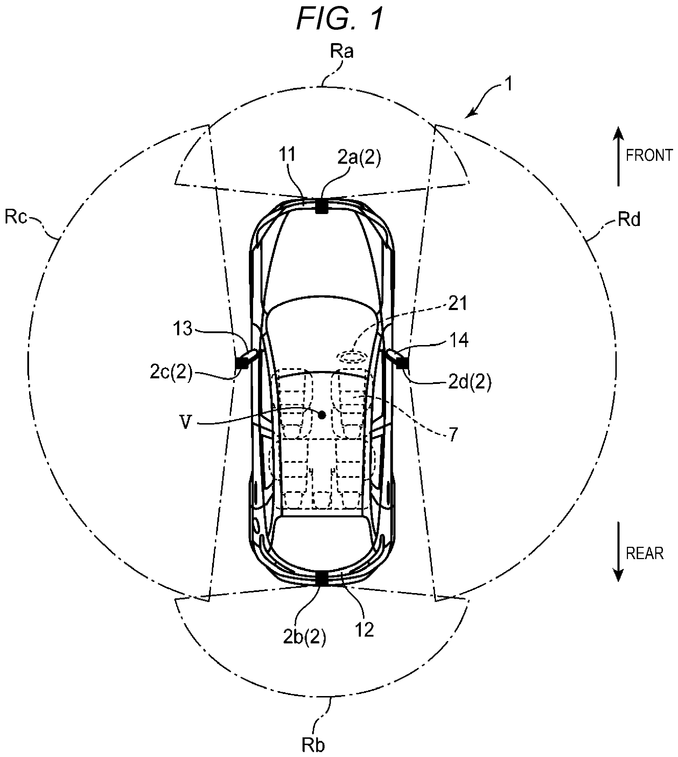

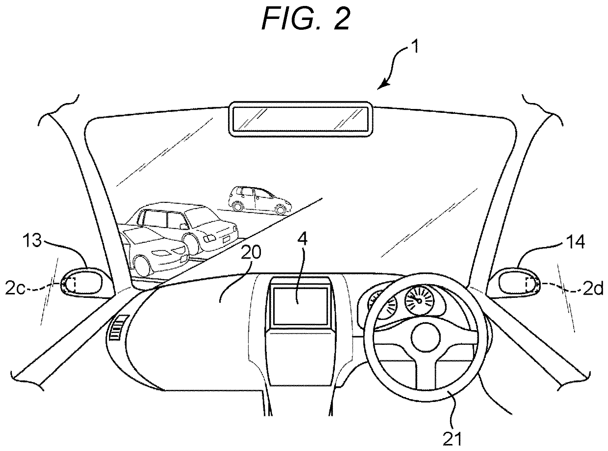

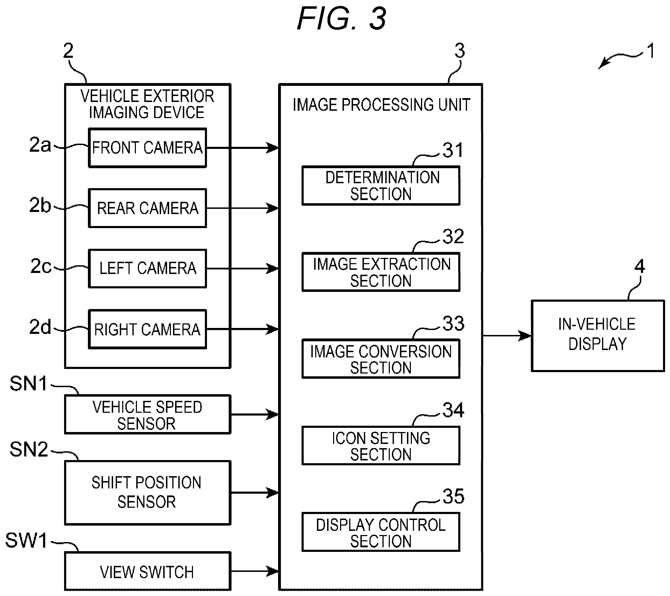

Fig. 1 is a plan view of a vehicle that includes a vehicular display system 1 (hereinafter referred to as a display system 1) according to an embodiment of the present invention, Fig. 2 is a perspective view illustrating a front portion of a cabin in the vehicle, and Fig. 3 is a block diagram illustrating a control system of the display system 1. As illustrated in Fig. 1, Fig. 2, and Fig. 3, the display system 1 includes: a vehicle exterior imaging device 2 (Fig. 1, Fig. 3) that captures an image of a surrounding area of the vehicle; an image processing unit 3 (Fig. 3) that executes various types of image processing on the image captured by the vehicle exterior imaging device 2; and an in-vehicle display 4 (Fig. 2, Fig. 3) that shows the image processed by the image processing unit 3. The vehicle exterior imaging device 2 corresponds to an example of the "imaging unit" in the present invention, and the in-vehicle display 4 corresponds to an example of the "display unit" in the present invention.

The vehicle exterior imaging device 2 includes: a front camera 2a that captures an image of an area in front of the vehicle; a rear camera 2b that captures an image of an area behind the vehicle; a left camera 2c that captures an image of an area on a left side of the vehicle; and a right camera 2d that captures an image of an area on a right side of the vehicle. As illustrated in Fig. 1, the front camera 2a is attached to a front face section 11 at a front end of the vehicle and is configured to be able to acquire an image within an angular range Ra in front of the vehicle. The rear camera 2b is attached to a rear surface of a hatchback 12 in a rear portion of the vehicle and is configured to be able to acquire an image within an angular range Rb behind the vehicle. The left camera 2c is attached to a side mirror 13 on the left side of the vehicle and is configured to be able to acquire an image within an angular range Rc on the left side of the vehicle. The right camera 2d is attached to a side mirror 14 on the right side of the vehicle and is configured to be able to acquire an image within an angular range Rd on the right side of the vehicle. Each of these front/rear/left/right cameras 2a to 2d is constructed of a camera with a fisheye lens and thus having a wide visual field.

The in-vehicle display 4 is arranged in a central portion of an instrument panel 20 (Fig. 2) in the front portion of the cabin. The in-vehicle display 4 is constructed of a full-color liquid-crystal panel, for example, and can show various screens according to an operation by a passenger or a travel state of the vehicle. More specifically, in addition to a function of showing the images captured by the vehicle exterior imaging device 2 (the cameras 2a to 2d), the in-vehicle display 4 has a function of showing, for example, a navigation screen that provides a travel route to a destination of the vehicle, a setting screen used to set various types of equipment provided in the vehicle, and the like. The illustrated vehicle is a right-hand drive vehicle, and a steering wheel 21 is arranged on a right side of the in-vehicle display 4. In addition, a driver's seat 7 (Fig. 1) as a seat, on which a driver who drives the vehicle is seated, is arranged behind the steering wheel 21.

The image processing unit 3 executes various types of the image processing on the images, each of which is captured by the vehicle exterior imaging device 2 (the cameras 2a to 2d), to generate an image that is acquired when the surrounding area of the vehicle is seen from the inside of the cabin (hereinafter referred to as a view image), and causes the in-vehicle display 4 to show the generated view image. Although details will be described below, the image processing unit 3 generates one of a rear-view image and a front-view image according to a condition and causes the in-vehicle display 4 to show the generated view image. The rear-view image is acquired when the area behind the vehicle is seen from the inside of the cabin. The front-view image is acquired when the area in front of the vehicle is seen from the inside of the cabin. The rear-view image corresponds to an example of the "first view image" in the present invention, and the front-view image corresponds to an example of the "second view image" in the present invention.

As illustrated in Fig. 3, a vehicle speed sensor SN1, a shift position sensor SN2, and a view switch SW1 are electrically connected to the image processing unit 3.

The vehicle speed sensor SN1 is a sensor that detects a travel speed of the vehicle.

The shift position sensor SN2 is a sensor that detects a shift position of an automatic transmission (not illustrated) provided in the vehicle. The automatic transmission can achieve at least four shift positions of drive (D), neutral (N), reverse (R), and parking (P), and the shift position sensor SN2 detects whether any of these positions is achieved. The D-position is the shift position that is selected when the vehicle travels forward (a forward range), the R-position is the shift position that is selected when the vehicle travels backward (a backward range), and each of the positions of N, P is the shift position that is selected when the vehicle does not travel.

The view switch SW1 is a switch that is used to determine whether to permit display of the view image when the shift position is the D-position (that is, when the vehicle travels forward). Although details will be described below, in this embodiment, the in-vehicle display 4 automatically shows the rear-view image when the shift position is the R-position (the backward range). Meanwhile, in the case where the shift position is the D-position (the forward range), the in-vehicle display 4 shows the front-view image only when the view switch SW1 is operated (that is, when the driver makes a request). According to an operation status of the view switch SW1 and a detection result by the shift position sensor SN2, the image processing unit 3 determines whether one of the front-view/rear-view images is shown on the in-vehicle display 4 or none of the front-view/rear-view images is shown on the in-vehicle display 4. The view switch SW1 can be provided to the steering wheel 21, for example.

### (2) Details of Image Processing Unit

A further detailed description will be made on a configuration of the image processing unit 3. As illustrated in Fig. 3, the image processing unit 3 functionally has a determination section 31, an image extraction section 32, an image conversion section 33, an icon setting section 34, and a display control section 35.

The determination section 31 is a module that makes various necessary determinations for execution of the image processing.

The image extraction section 32 is a module that executes processing to extract the images captured by the front/rear/left/right cameras 2a to 2d within a required range. More specifically, the image extraction section 32 switches the cameras to be used according to whether the vehicle travels forward or backward. For example, when the vehicle travels backward (when the shift position is in an R range), the plural cameras including at least the rear camera 2b are used. When the vehicle travels forward (when the shift position is in a D range), the plural cameras including at least the front camera 2a are used. A range of the image that is extracted from each of the cameras to be used is set to be a range that corresponds to an angle of view of the image (the view image, which will be described below) finally shown on the in-vehicle display 4.

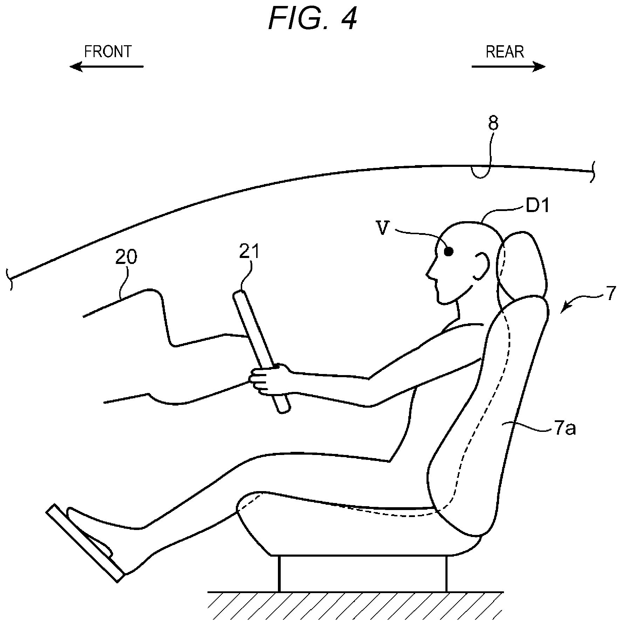

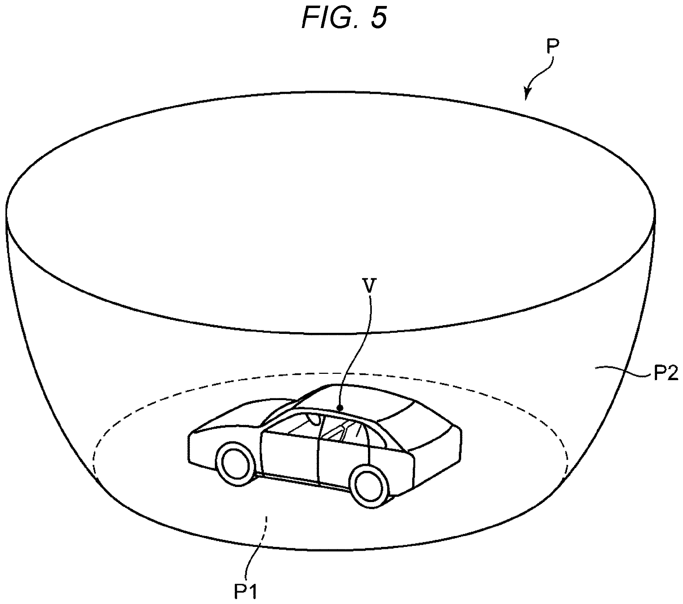

The image conversion section 33 is a module that executes viewpoint conversion processing while synthesizing the images, which are captured by the cameras and extracted by the image extraction section 32, so as to generate the view image that is the image of the surrounding area of the vehicle seen from the inside of the cabin. Upon conversion of the viewpoint, a projection surface P, which is illustrated in Fig. 5, and a virtual viewpoint V, which is illustrated in Fig. 1, Fig. 4, and Fig. 5, are used. The projection surface P is a bowl-shaped virtual surface and includes: a plane projection surface P1 that is set on a level road surface when it is assumed that the vehicle travels on such a road surface; and a stereoscopic projection surface P2 that is elevated from an outer circumference of the plane projection surface P1. The plane projection surface P1 is a circular projection surface with a diameter capable of surrounding the vehicle. The stereoscopic projection surface P2 is formed to be expanded upward as a diameter thereof is increased upward (as separating from the outer circumference of the plane projection surface P1). The virtual viewpoint V (Fig. 1, Fig. 4) is a point that serves as a projection center when the view image is projected to the projection surface P, and is set in the cabin. The image conversion section 33 converts the image, which is captured by each of the cameras and extracted, into the view image that is projected to the projection surface P with the virtual viewpoint V as the projection center. The convertible view images at least include: the rear-view image that is a projection image in the case where the area behind the vehicle is seen from the virtual viewpoint V (an image that is acquired by projecting the camera image to a rear area of the projection surface P); and the front-view image that is a projection image in the case where the area in front of the vehicle is seen from the virtual viewpoint V (an image that is acquired by projecting the camera image to a front area of the projection surface P). A horizontal angle of view of each of the view images is set to an angle of view that corresponds to a stable visual field during gazing of a person (will be described below in detail).

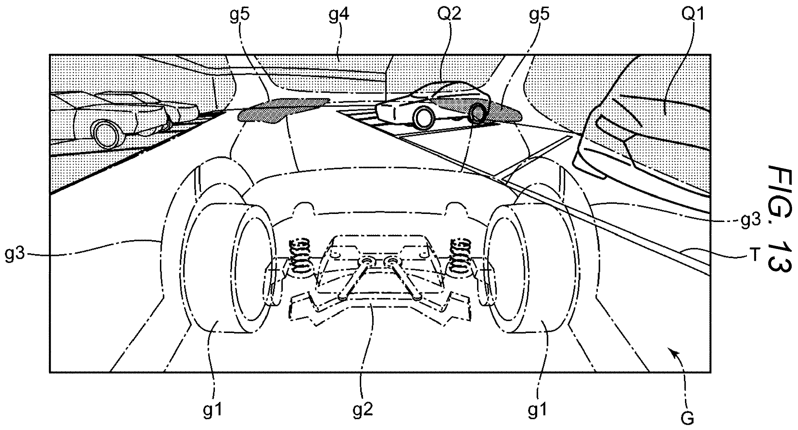

The icon setting section 34 is a module that executes processing to set an own vehicle icon G (Fig. 13) that is shown in a superimposed manner on the above view image (the rear-view image or the front-view image). The own vehicle icon G is a graphic image that shows various components (wheels and cabin components) of the own vehicle in a transmissive state, and such components appear when the area in front of or the area behind the own vehicle is seen from the virtual viewpoint V.

The display control section 35 is a module that executes processing to show the view image, on which the own vehicle icon G is superimposed, on the in-vehicle display 4. That is, the display control section 35 superimposes the own vehicle icon G, which is set by the icon setting section 34, on the view image, which is generated by the image conversion section 33, and shows the superimposed view image on the in-vehicle display 4.

### (3) Control Operation

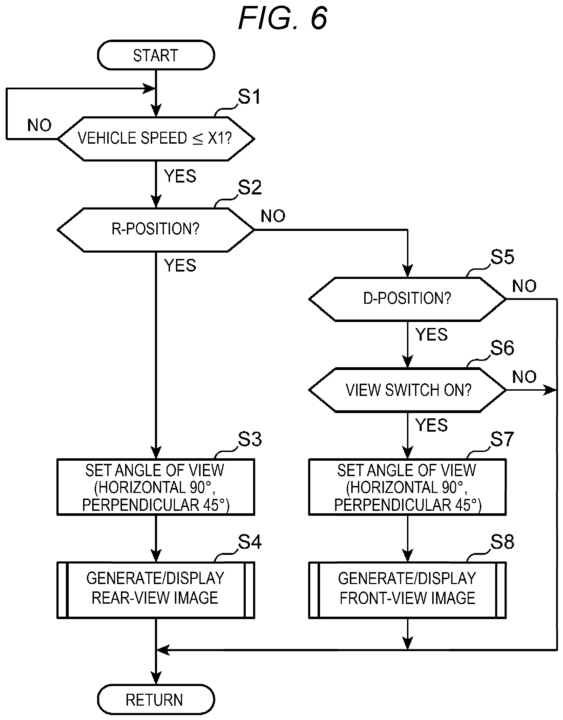

Fig. 6 is a flowchart illustrating contents of control that is executed by the image processing unit 3 during driving of the vehicle. When the control illustrated in Fig. 6 is started, the image processing unit 3 (the determination section 31) determines whether the vehicle speed detected by the vehicle speed sensor SN1 is equal to or lower than a predetermined threshold speed X1 (step S1). The threshold speed X1 can be set to approximately 15 km/h, for example.

If it is determined YES in step S1 and it is thus confirmed that the vehicle speed is equal to or lower than the threshold speed X1, the image processing unit 3 (the determination section 31) determines whether the shift position detected by the shift position sensor SN2 is the R-position (the backward range) (step S2).

If it is determined YES in step S2 and it is thus confirmed that the shift position is the R-position (in other words, when the vehicle travels backward), the image processing unit 3 sets the angle of view of the rear-view image, which is generated in step S4 described below (step S3). More specifically, in this step S3, the horizontal angle of view is set to 90 degrees, and a perpendicular angle of view is set to 45 degrees.

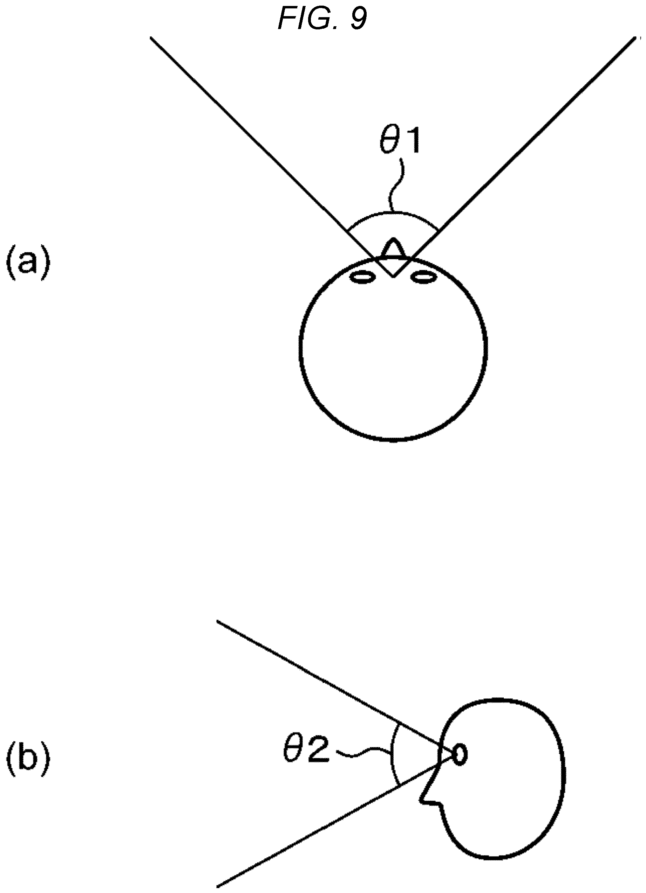

The angle of view, which is set in step S3, is based on the stable visual field during gazing of the person. The stable visual field during gazing means such a range that the person can visually recognize without difficulty due to assistance of head movement (cervical movement) with eye movement. In general, it is said that the stable visual field during gazing has an angular range between 45 degrees to the left and 45 degrees to the right in the horizontal direction and has an angular range between 30 degrees upward and 40 degrees downward in the perpendicular direction. That is, as illustrated in Figs. 9(a), (b), when a maximum angle in the horizontal direction (a maximum horizontal angle) of the stable visual field during gazing is set as θ1, and a maximum angle in the perpendicular direction (a maximum perpendicular angle) of the stable visual field during gazing is set as θ2, the maximum horizontal angle θ1 is 90 degrees, and the maximum perpendicular angle θ2 is 70 degrees. In addition, it is said that an effective visual field having a horizontal angular range of 30 degrees and a perpendicular angular range of 20 degrees exists within the stable visual field during gazing, and thus information in this effective visual field can accurately be identified only with the eye movement. On the contrary, it is difficult to identify information on the outside of the effective visual field with a sufficient degree of accuracy even when such information is visible. Thus, it is difficult to notice a slight change that occurs to such information. The assistance of the head movement (the cervical movement) is necessary to visually recognize (gaze) the information on the outside of the effective visual field with the high degree of accuracy. Meanwhile, it is considered that, when the information is located on the outside of the effective visual field but within the stable visual field during gazing, it is possible to accurately identify such information only with the slight head movement without difficulty and to handle the slight change that occurs to such information relatively promptly.

In consideration of the above point, in this embodiment, the angle of view of the rear-view image is set to 90 degrees in the horizontal direction and 45 degrees in the perpendicular direction. That is, the horizontal angle of view of the rear-view image is set to 90 degrees, which is the same as the maximum horizontal angle θ1 of the stable visual field during gazing, and the perpendicular angle of view of the rear-view image is set to 45 degrees, which is smaller than the maximum perpendicular angle θ2 (= 70 degrees) of the stable visual field during gazing.

Next, the image processing unit 3 executes control to generate the rear-view image, which is acquired when the area behind the vehicle is seen from the virtual viewpoint V in the cabin, and show the rear-view image on the in-vehicle display 4 (step S4). Details of this control will be described below.

Next, a description will be made on control that is executed if it is determined NO in above step S2, that is, if the shift position of the automatic transmission is not the R-position (the backward range) . In this case, the image processing unit 3 (the determination section 31) determines whether the shift position detected by the shift position sensor SN2 is the D-position (the forward range) (step S5).

If it is determined YES in step S5 and it is thus confirmed that the shift position is the D-position (in other words, when the vehicle travels forward), the image processing unit 3 (the determination section 31) determines whether the view switch SW1 is in an ON state on the basis of a signal from the view switch SW1 (step S6).

If it is determined YES in step S6 and it is thus confirmed that the view switch SW1 is in the ON state, the image processing unit 3 sets the angle of view of the front-view image, which is generated in step S8 described below (step S7). The angle of view of the front-view image, which is set in this step S7, is the same as the angle of view of the rear-view image, which is set in above-described step S3, and is set to 90 degrees in the horizontal direction and 45 degrees in the perpendicular direction in this embodiment.

Next, the image processing unit 3 executes control to generate the front-view image, which is acquired when the area in front of the vehicle is seen from the virtual viewpoint V in the cabin, and show the front-view image on the in-vehicle display 4 (step S8). Details of this control will be described below.

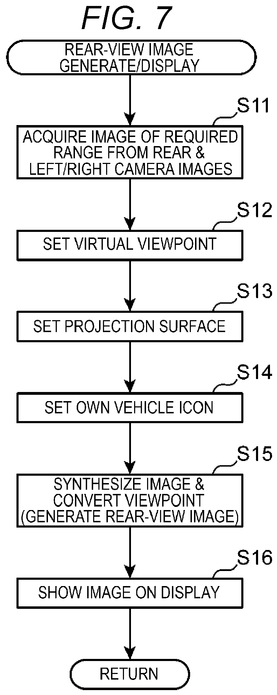

Fig. 7 is a subroutine illustrating details of rear-view image generation/display control that is executed in above-described step S4. When the control illustrated in Fig. 7 is started, the image processing unit 3 (the image extraction section 32) acquires image data of the required range from the images captured by the rear camera 2b, the left camera 2c, and the right camera 2d (step S11).

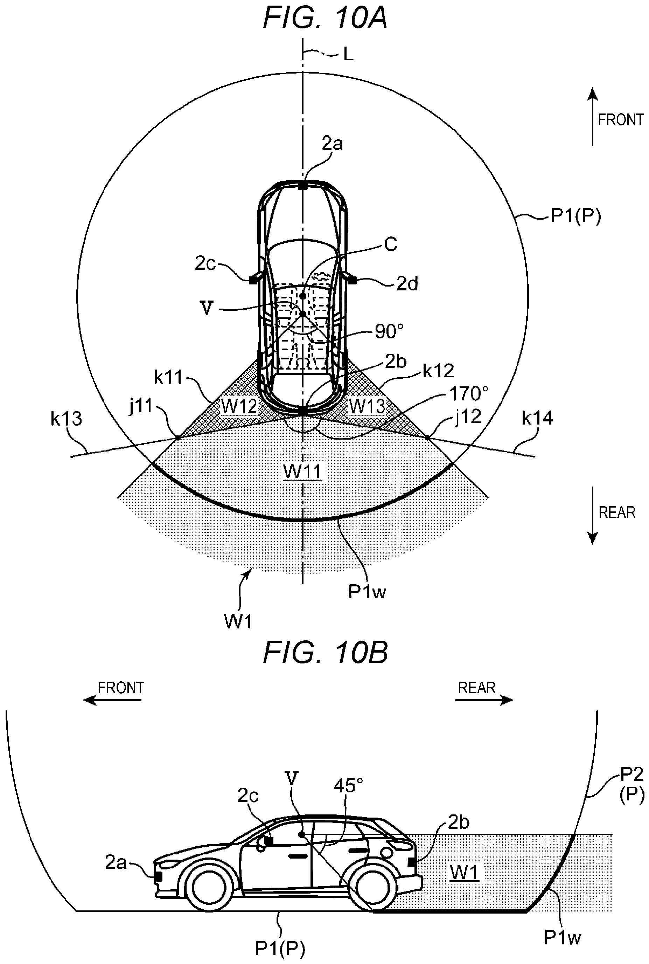

Figs. 10(a), (b) are schematic views for illustrating the range of the image data acquired in step S11, and illustrate the vehicle and the projection surface P therearound in a plan view and a side view, respectively. As it has already been described, the rear-view image is the image that is acquired by projecting the camera image to the rear area within the angular range of 90 degrees in the horizontal direction and 45 degrees in the perpendicular direction with the virtual viewpoint V being the projection center. Accordingly, the image data that is required to acquire such a rear-view image is image data of an imaging area W1 in a three-dimensional fan shape that at least expands backward at angles of 90 degrees in the horizontal direction and 45 degrees in the perpendicular direction from the virtual viewpoint V. Thus, in step S11, data that corresponds to the image within the imaging area W1 is acquired from the data of each of the images captured by the rear camera 2b, the left camera 2c, and the right camera 2d.

A further detailed description will be made on this point. In this embodiment, as illustrated in Fig. 10(a), the virtual viewpoint V is set on a vehicle center axis L (an axis that passes through a vehicle center C and extends longitudinally), and an image that is acquired when the area behind is seen straight from this virtual viewpoint V is generated as the rear-view image. Thus, in a plan view, the imaging area W1 is a fan-shaped area that expands backward with the horizontal angular range of 90 degrees (45 degrees each to the left and right of the vehicle center axis L) from the virtual viewpoint V, that is, a fan-shaped area that is defined by a first line k11 and a second line k12, the first line k11 extends backward to the left at an angle of 45 degrees from the virtual viewpoint V, and the second line k12 extends backward to the right at an angle of 45 degrees from the virtual viewpoint V. In order to acquire imaging data within such an imaging area W1, in above step S11, the imaging area W1 is divided into three areas W11 to W13 (Fig. 10(a)) in the plan view, and image data of the areas W11 to W13 is acquired from the different cameras. When the area W11, the area W12, the area W13 are set as a first area, a second area, and a third area, respectively, in this embodiment, image data of the first area W11 is acquired from the rear camera 2b, image data of the second area W12 is acquired from the left camera 2c, and image data of the third area W13 is acquired from the right camera 2d.

More specifically, of the above-described imaging area W1 (the area defined by the first line k11 and the second line k12), the first area W11 is an area overlapping a fan-shaped area that expands backward with a horizontal angular range of 170 degrees (85 degrees each to the left and right of the vehicle center axis L) from the rear camera 2b. In other words, the first area W11 is an area defined by a third line k13 that extends backward to the left at an angle of 85 degrees from the rear camera 2b, a fourth line k14 that extends backward to the right at an angle of 85 degrees from the rear camera 2b, a portion of the first line k11 that is located behind a point of intersection j11 with the third line k13, and a portion of the second line k12 that is located behind a point of intersection j12 with the fourth line k14. The second area W12 is a remaining area after the first area W11 is removed from a left half portion of the imaging area W1. The third area W13 is a remaining area after the first area W11 is removed from a right half portion of the imaging area W1. Of the second and third areas W12, W13, areas immediate behind the vehicle are blind areas, images of which cannot be captured by the left and right cameras 2c, 2d, respectively. However, the images of these blind areas can be compensated by specified interpolation processing (for example, processing to stretch an image of an adjacent area to each of the blind areas).

After the image of the required range is acquired from each of the cameras 2b, 2c, 2d, just as described, the image processing unit 3 (the image conversion section 33) sets the virtual viewpoint V that is used when the rear-view image is generated in step S15, which will be described below (step S12). As illustrated in Fig. 4 and Fig. 10(a), the virtual viewpoint V is set at a position included in the cabin and at a position that matches the vehicle center axis L in the plan view and corresponds to the driver's head D1 in the side view. That is, the virtual viewpoint V is set such that a position thereof in a left-right direction matches a center of a width of the vehicle and that positions thereof in the longitudinal direction and a vertical direction match the driver's head D1 (eye positions therein; that is, eye points). Here, it is assumed that the driver in this case has the same physical constitution as AM50, a 50th percentile dummy of an American adult male and that a seat position of the driver's seat 7 (Fig. 4), on which the driver is seated, is set to such a position that the driver corresponding to AM50 can take an appropriate driving posture. As illustrated in Fig. 4, the virtual viewpoint V, which is set in the manner to match the driver's head D1 (the eye points therein) in the side view, is located at a height between an upper end of a seat back 7a of the driver's seat 7 and a roof panel 8.

Next, the image processing unit 3 (the image conversion section 33) sets the projection surface P that is used when the rear-view image is generated in step S15, which will be described below (step S13). As it has already been described with reference to Fig. 5, the projection surface P is the bowl-shaped projection surface including the vehicle and includes the plane projection surface P1 and the stereoscopic projection surface P2. In this embodiment, a center of the projection surface P (the plane projection surface P1) in the plan view matches the vehicle center C (the center in the longitudinal direction and a vehicle width direction of the vehicle) illustrated in Fig. 10(a). That is, in step S13, the image processing unit 3 (the image conversion section 33) sets the circular plane projection surface P1 that has the same center as the vehicle center C, and sets the stereoscopic projection surface P2 that is elevated from the outer circumference of this plane projection surface P1 while the diameter thereof is increased with a specified curvature. In addition, a radius of the plane projection surface P1 is set to approximately 4 to 5 m, for example, such that a clearance of approximately 2 m is provided in front of and behind the vehicle.

Next, the image processing unit 3 (the icon setting section 34) sets the own vehicle icon G (Fig. 13) that is superimposed on the rear-view image and shown therewith in step S16, which will be described below (step S14). As illustrated in Fig. 13, the own vehicle icon G, which is set herein, is an icon representing the various components of the own vehicle, and such components appear when the area behind the own vehicle is seen from the virtual viewpoint V. The own vehicle icon G includes the graphic image that shows a rear wheel g1 of the vehicle and contour components (a rear fender g3 and the like) in the rear portion of the vehicle in the transmissive state. Such an own vehicle icon G can be generated by magnifying or minifying the graphic image, which is stored in the image processing unit 3 in advance, at a scale defined from a positional relationship between the virtual viewpoint V and the projection surface P.

Next, the image processing unit 3 (the image conversion section 33) synthesizes the images that are captured by the cameras 2b, 2c, 2d and acquired in step S11, and executes the viewpoint conversion processing on the synthesized image by using the virtual viewpoint V and the projection surface P set in steps S12, S13, so as to generate the rear-view image that is acquired when the area behind the vehicle is seen from the virtual viewpoint V (step S15). That is, the image processing unit 3 (the image conversion section 33) synthesizes the image of the first area W11 captured by the rear camera 2b, the image of the second area W12 captured by the left camera 2c, and the image of the third area W13 captured by the right camera 2d (see Fig. 10(a) for each of the areas). Then, the image processing unit 3 (the image conversion section 33) executes the viewpoint conversion processing to project this synthesized image to a rear area P1w that is a part of the rear area of the projection surface P with the virtual viewpoint V as the projection center, that is, an area corresponding to the areas W11 to W13 in the projection surface P (the plane projection surface P1 and the stereoscopic projection surface P2). In this way, it is possible to generate the rear-view image that is acquired when the area behind the vehicle is seen from the virtual viewpoint V.

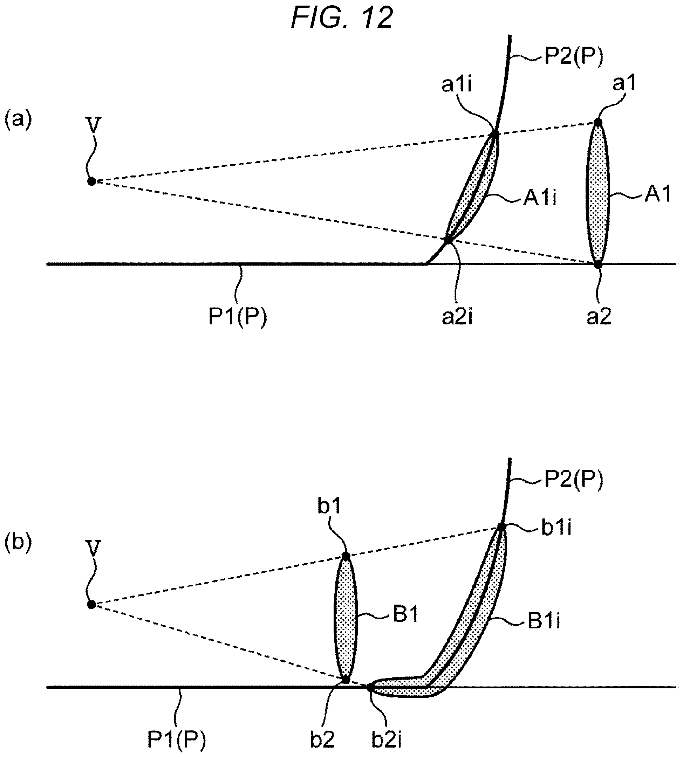

The above-described processing of viewpoint conversion (projection to the projection surface P) can be executed as follows, for example. First, three-dimensional coordinates (X, Y, Z) are defined for each pixel of the synthesized camera image. Next, the coordinates of each of the pixels are converted into projected coordinates by using a specified calculation formula, which is defined by a positional relationship between the virtual viewpoint V and the rear area P1w of the projection surface P, and the like. For example, as illustrated in Fig. 12(a), an image A1 is acquired by capturing an image of an imaging target that is farther from the virtual viewpoint V than the projection surface P. When coordinates of particular pixels in this image A1 are a1, a2, projected coordinates of such pixels are a1i, a2i on the projection surface P, respectively. On the contrary, as illustrated in Fig. 12(b), an image B1 is acquired by capturing an image of an imaging target that is closer to the virtual viewpoint V than the projection surface P. When coordinates of particular pixels in this image B1 are b1, b2, projected coordinates of such pixels are b1i, b2i on the projection surface P, respectively. Then, the captured image is processed on the basis of such a relationship between the converted coordinate and the original coordinate. For example, in the case of Fig. 12(a), the image A1 of the imaging target is processed and converted into the image A1i. In the case of Fig. 12(b), the image B1 of the imaging target is processed and converted into the image B1i. The image processing unit 3 (the image conversion section 33) executes the processing of viewpoint conversion (projection to the projection surface P) by the procedure as described so far, and thereby generates the rear-view image that is acquired when the area behind the vehicle is seen from the virtual viewpoint V.

Next, the image processing unit 3 (the display control section 35) causes the in-vehicle display 4 to show the rear-view image, which is generated in step S15, in a state where the own vehicle icon G set in step S14 is superimposed thereon (step S16). Fig. 13 is a view schematically illustrating an example of the display. In this example, the rear-view image includes: an image of parked vehicles (other vehicles) Q1, Q2 that are located behind the own vehicle; and an image of white lines T that are provided to the road surface in order to set parking spaces. The own vehicle icon G includes a graphic image that shows, in the transmissive state, the left and right rear wheels g1, g1, suspension components g2, the rear fenders g3, g3 located around the rear wheels g1, g1, rear glass g4, and left and right rear lamps g5.

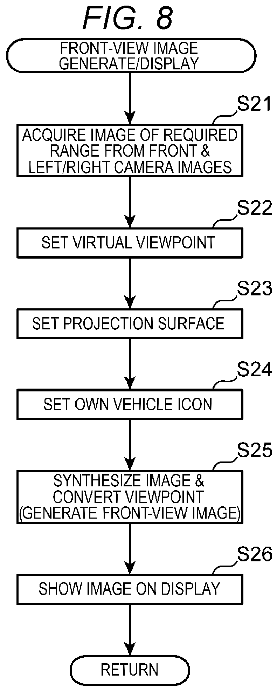

Next, a detailed description will be made on front-view image generation/display control that is executed in above-described step S8 (Fig. 6) with reference to Fig. 8. When the control illustrated in Fig. 8 is started, the image processing unit 3 (the image extraction section 32) acquires image data of the required range from the images captured by the front camera 2a, the left camera 2c, and the right camera 2d (step S21).

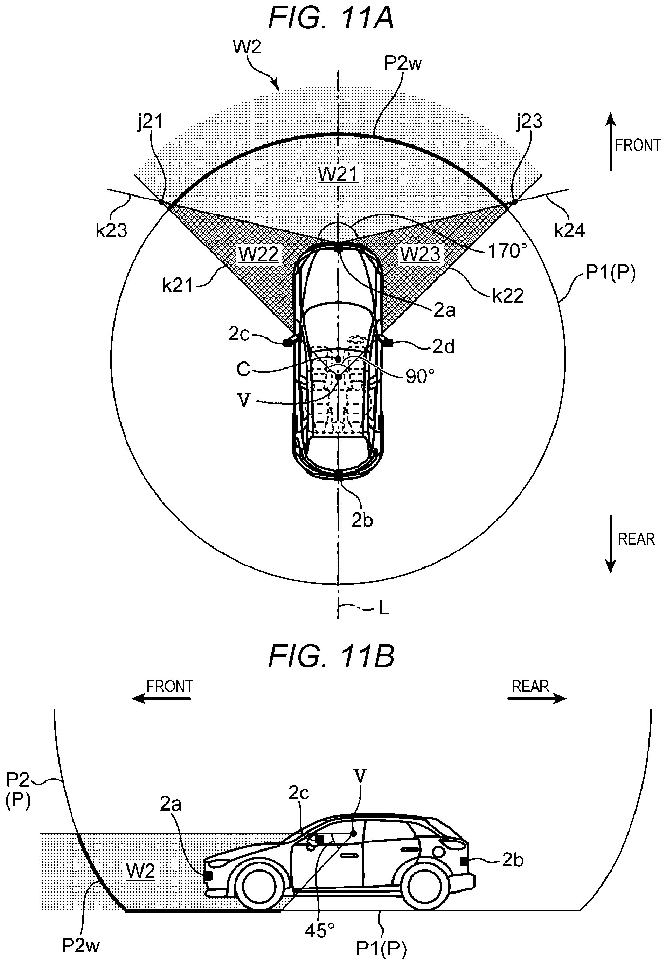

Figs. 11(a), (b) are schematic views for illustrating the range of the image data acquired in step S21, and illustrate the vehicle and the projection surface P therearound in a plan view and a side view, respectively. As it has already been described, the front-view image is the image that is acquired by projecting the camera image to the front area within the angular range of 90 degrees in the horizontal direction and 45 degrees in the perpendicular direction with the virtual viewpoint V being the projection center. Accordingly, the image data that is required to acquire such a front-view image is image data of an imaging area W2 in a three-dimensional fan shape that at least expands forward at angles of 90 degrees in the horizontal direction and 45 degrees in the perpendicular direction from the virtual viewpoint V. Thus, in step S21, data that corresponds to the image within the imaging area W2 is acquired from the data of each of the images captured by the front camera 2a, the left camera 2c, and the right camera 2d.

A method for acquiring the image within the front imaging area W2 in step S21 is similar to the method in above-described step S11 (Fig. 7), that is, the method for acquiring the image within the rear imaging area W1 (Fig. 10). Thus, in step S21, as illustrated in Fig. 11(a), in a plan view, a fan-shaped area that expands forward with the horizontal angular range of 90 degrees (45 degrees each to the left and right of the vehicle center axis L) from the virtual viewpoint V, that is, a fan-shaped area that is defined by a first line k21 and a second line k22 is defined as the imaging area W2, the first line k21 extends forward to the left at an angle of 45 degrees from the virtual viewpoint V, and the second line k22 extends backward to the right at an angle of 45 degrees from the virtual viewpoint V. Then, this imaging area W2 is divided into three areas W21 to W23 in the plan view, and image data of the areas W21 to W23 is acquired from the different cameras. When the area W21, the area W22, the area W23 are set as a first area, a second area, and a third area, respectively, in this embodiment, image data of the first area W21 is acquired from the front camera 2a, image data of the second area W22 is acquired from the left camera 2c, and image data of the third area W23 is acquired from the right camera 2d.

More specifically, of the above-described imaging area W2 (the area defined by the first line k21 and the second line k22), the first area W21 is an area overlapping a fan-shaped area that expands forward with a horizontal angular range of 170 degrees (85 degrees each to the left and right of the vehicle center axis L) from the front camera 2a. In other words, the first area W21 is an area defined by a third line k23 that extends forward to the left at an angle of 85 degrees from the front camera 2a, a fourth line k24 that extends forward to the right at an angle of 85 degrees from the front camera 2a, a portion of the first line k21 that is located in front of a point of intersection j21 with the third line k23, and a portion of the second line k22 that is located in front of a point of intersection j22 with the fourth line k24. The second area W22 is a remaining area after the first area W21 is removed from a left half portion of the imaging area W2. The third area W23 is a remaining area after the first area W21 is removed from a right half portion of the imaging area W2. Of the second and third areas W22, W23, areas immediately in front of the vehicle are blind areas, images of which cannot be captured by the left and right cameras 2c, 2d, respectively. However, the images of these blind areas can be compensated by the specified interpolation processing (for example, the processing to stretch an image of an adjacent area to each of the blind areas).

After the image of the required range is acquired from each of the cameras 2a, 2c, 2d, just as described, the image processing unit 3 (the image conversion section 33) sets the virtual viewpoint V that is used when the front-view image is generated in step S25, which will be described below (step S22). This virtual viewpoint V is the same as the virtual viewpoint V (above step S12) that is used when the rear-view image, which has already been described, is generated. This virtual viewpoint V is set at the position that matches the vehicle center axis L in the plan view and corresponds to the driver's head D1 (the eye points) in the side view.

Next, the image processing unit 3 (the image conversion section 33) sets the projection surface P that is used when the front-view image is generated in step S25, which will be described below (step S23). This projection surface P is the same as the projection surface P (above step S13) that is used when the rear-view image, which has already been described, is generated. This projection surface P includes: the circular plane projection surface P1 that has the same center as the vehicle center C; and the stereoscopic projection surface P2 that is elevated from the outer circumference of the plane projection surface P1 while the diameter thereof is increased with the specified curvature.

Next, the image processing unit 3 (the icon setting section 34) sets the own vehicle icon G that is superimposed on the front-view image and shown therewith in step S26, which will be described below (step S24). Although not illustrated, the own vehicle icon G, which is set herein, is an icon representing the various components of the own vehicle, and such components appear when the area in front of the own vehicle is seen from the virtual viewpoint V. The own vehicle icon G includes the graphic image that shows a front wheel of the vehicle and contour components (a front fender and the like) in the front portion of the vehicle in the transmissive state.

Next, the image processing unit 3 (the image conversion section 33) synthesizes the images that are captured by the cameras 2a, 2c, 2d and acquired in step S21, and executes the viewpoint conversion processing on the synthesized image by using the virtual viewpoint V and the projection surface P set in steps S22, S23, so as to generate the front-view image that is acquired when the area in front of the vehicle is seen from the virtual viewpoint V (step S25). That is, the image processing unit 3 (the image conversion section 33) synthesizes the image of the first area W21 captured by the front camera 2a, the image of the second area W22 captured by the left camera 2c, and the image of the third area W23 captured by the right camera 2d (see Fig. 11(a) for each of the areas). Then, the image processing unit 3 (the image conversion section 33) executes the viewpoint conversion processing to project this synthesized image to a front area P2w that is a part of the front area of the projection surface P with the virtual viewpoint V as the projection center, that is, an area corresponding to the areas W21 to W23 in the projection surface P (the plane projection surface P1 and the stereoscopic projection surface P2). In this way, it is possible to generate the front-view image that is acquired when the area in front of the vehicle is seen from the virtual viewpoint V. Here, since details of the viewpoint conversion processing are the same as those at the time of generating the rear-view image, which has already been described, the description thereon will not be made here.

Next, the image processing unit 3 (the display control section 35) causes the in-vehicle display 4 to show the front-view image, which is generated in step S25, in a state where the own vehicle icon G set in step S24 is superimposed thereon (step S26).

### (4) Operational Effects

As it has already been described so far, in this embodiment, on the basis of the images captured by the vehicle exterior imaging device 2 (the cameras 2a to 2d), the in-vehicle display 4 can show the rear-view image, which is the image acquired when the area behind the vehicle is seen from the virtual viewpoint V in the cabin, and the front-view image, which is the image acquired when the area in front of the vehicle is seen from the virtual viewpoint V. The horizontal angle of view of each of these view images is set to 90 degrees that is the angle of view corresponding to the stable visual field during gazing of the person. Such a configuration has an advantage of capable of effectively assisting with the driver's driving operation by improving visibility of the rear-view image and the front-view image.

That is, in the above embodiment, the rear-view image and the front-view image, which are the images of the areas seen in the two different directions (forward and backward) from the virtual viewpoint V in the cabin, can be shown. Thus, for example, in each of at least two driving scenes such as reverse parking and forward parking in different moving directions of the vehicle, it is possible to appropriately assist with the driver's driving operation by using the view image. In addition, the horizontal angle of view of each of the rear-view image and the front-view image is set to the same 90 degrees as the maximum horizontal angle (θ1 = 90 degrees in Fig. 9(a)) of the stable visual field during gazing, which is the range that the person can visually recognize without difficulty due to the assistance of the head movement (the cervical movement) with the eye movement. Thus, it is possible to provide the driver with necessary and sufficient information for identifying an obstacle (for example, another vehicle, a pedestrian, or the like) around the own vehicle through the view image, and it is also possible to effectively assist with the driver's driving operation by providing such information. For example, in the case where the view image includes the obstacles such as the parked vehicles (other vehicles) Q1, Q2 illustrated in Fig. 13, the driver can promptly identify such obstacles and can promptly determine information such as a direction and a distance to the obstacle on the basis of locations, size, and the like of the identified obstacles. In this way, it is possible to appropriately assist with the driver such that the driver can perform the desired driving operation (for example, an operation to park the own vehicle between the parked vehicles Q1, Q2) while avoiding collisions with the obstacles. Thus, it is possible to favorably secure safety of the vehicle.

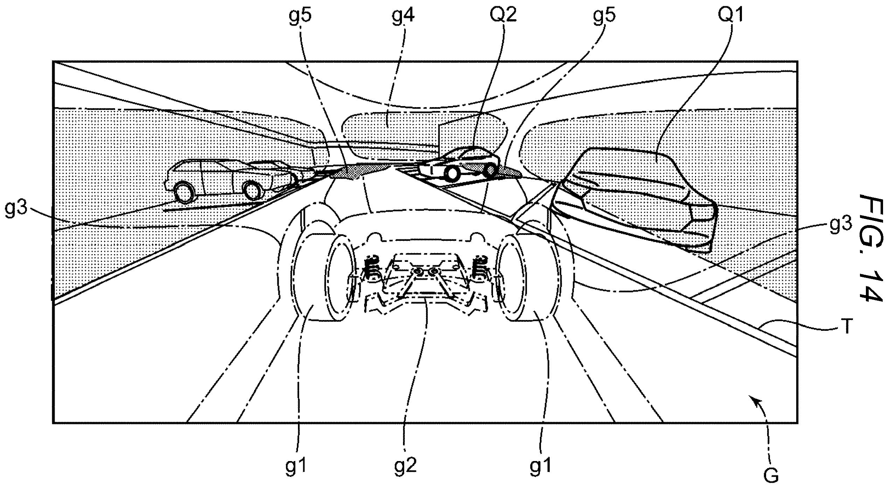

Fig. 14 is a view illustrating, as a comparative example, an example of the view image that is acquired when the horizontal angle of view is significantly increased from 90 degrees. More specifically, this example in Fig. 14 is an example of the rear-view image in the case where the horizontal angle of view is increased to 150 degrees. As illustrated in Fig. 14, in the case where the angle of view of the view image is significantly increased from 90 degrees, it is possible to provide the driver with the information on the further wide area through the view image. However, the obstacle that is far away from the own vehicle in the left-right direction is also shown. As a result, there is a possibility that the driver is distracted and misses the important information.

On the contrary, in the case where the horizontal angle of view of the view image is significantly reduced from 90 degrees, the information can further easily be identified due to a reduction in an amount of the information included in the view image. However, there is an increased possibility that, although an obstacle that possibly collides with the own vehicle exists, such an obstacle does not appear in the view image (failure in display of the obstacle), which degrades the safety.

To handle the above problem, in the above embodiment, the horizontal angle of view of each of the rear-view image and the front-view image is set to 90 degrees. Thus, it is possible to provide the required information on the obstacle and the like with the high visibility through both of the view images and thus to improve the safety of the vehicle.

In the above embodiment, since the perpendicular angle of view of each of the rear-view image and the front-view image is set to 45 degrees, it is possible to show each of the view images with the perpendicular angle of view that is sufficiently smaller than the maximum perpendicular angle (θ2 = 70 degrees in Fig. 9(b)) of the stable visual field during gazing and thus to improve the visibility of each of the view images. Here, the vehicle consistently moves along the road surface (does not move vertically with respect to the road surface). Thus, even when the perpendicular angle of view of each of the view images is 45 degrees, which is sufficiently smaller than 70 degrees, it is possible to provide the information on the obstacle to watch out, and the like with no difficulty.

In the above embodiment, the rear-view image is generated on the basis of the images captured by the rear camera 2b, the left camera 2c, and the right camera 2d. Thus, it is possible to appropriately acquire the image data of the area behind the vehicle and the image data of the area obliquely behind the vehicle from the cameras 2b, 2c, 2d, and it is possible to appropriately generate the rear-view image as the image that is acquired when the area behind the vehicle is seen from the virtual viewpoint V by executing the viewpoint conversion processing and the like while synthesizing the acquired image data.

Similarly, in the above embodiment, the front-view image is generated on the basis of the images captured by the front camera 2a, the left camera 2c, and the right camera 2d. Thus, it is possible to appropriately acquire the image data of the area in front of the vehicle and the image data of the area obliquely in front of the vehicle from the cameras 2b, 2c, 2d, and it is possible to appropriately generate the front-view image as the image that is acquired when the area in front of the vehicle is seen from the virtual viewpoint V by executing the viewpoint conversion processing and the like while synthesizing the acquired image data.

In addition, in the above embodiment, the virtual viewpoint V is set at the position that corresponds to the driver's head D1 in the longitudinal direction and the vertical direction of the vehicle. Thus, it is possible to generate, as the front-view image or the rear-view image, a bird's-eye view image with high visibility (that can easily and intuitively be recognized by the driver) in which a surrounding area in front of or behind the vehicle is seen from a position near the actual eye points of the driver. As a result, it is possible to effectively assist with driving by the driver through such a view image.

### 5. Modified Examples

In the above embodiment, the horizontal angle of view of each of the rear-view image and the front-view image is set to the same 90 degrees as the maximum horizontal angle θ1 (= 90 degrees) of the stable visual field during gazing of the person. However, in consideration of a certain degree of individual variation in breadth of the stable visual field during gazing, the horizontal angle of view of each of the view images may be a value that is slightly offset from 90 degrees. In other words, the horizontal angle of view of each of the view images only needs to be 90 degrees or a value near 90 degrees (approximately 90 degrees), and thus can be set to an appropriate value within a range between 85 degrees and 95 degrees, for example.

In the above embodiment, the perpendicular angle of view of each of the rear-view image and the front-view image is set to 45 degrees. However, the perpendicular angle of view of each of the view images only needs to be equal to or smaller than the maximum perpendicular angle θ2 (= 70 degrees) of the stable visual field during gazing of the person and equal to or larger than 40 degrees. That is, the perpendicular angle of view of each of the rear-view image and the front-view image can be set to an appropriate value within a range between 40 degrees and 70 degrees.

In the above embodiment, according to an advancing direction of the vehicle (the shift position of the automatic transmission), the in-vehicle display 4 shows one of the rear-view image (the first view image), which is acquired when the area behind the vehicle (in a first direction) is seen from the virtual viewpoint V and the front-view image (the second view image), which is acquired when the area in front of the vehicle (in a second direction) is seen from the virtual viewpoint V. However, instead of these rear-view image and front-view image, or in addition to each of the view images, a view image in a different direction from the longitudinal direction may be shown. In other words, the first view image and the second view image in the present invention only need to be images that are acquired when the two different directions are seen from the virtual viewpoint in the cabin. For example, an image that is acquired when the area on the left side is seen from the virtual viewpoint may be shown as the first view image, and an image that is acquired when the area on the right side is seen from the virtual viewpoint may be shown as the second view image.

In the above embodiment, the center of the projection surface P on which the camera image is projected at the time of generating the rear-view image and the front-view image matches the vehicle center C in the plan view. However, the projection surface P only needs to be set to include the vehicle, and thus the center of the projection surface P may be set to a position shifted from the vehicle center C. For example, the center of the projection surface P may match the virtual viewpoint V.

### [Description of Reference Signs and Numerals]

- 1: vehicular display system
- 2: vehicle exterior imaging device (imaging unit)
- 2a: front camera
- 2b: rear camera
- 2c: left camera
- 2d: right camera
- 3: image processing unit
- 4: in-vehicle display (display unit)
- D1: (driver's) head
- V: virtual viewpoint

## Claims

1. A vehicular display system (1) that is mounted on a vehicle to show an image of a surrounding area of the vehicle, the vehicular display system comprising:
an imaging unit (2) that captures the image of the surrounding area of the vehicle;
an image processing unit (3) that converts the image captured by the imaging unit (2) into a view image that is an image of the area seen from a predetermined virtual viewpoint in a cabin; and
a display unit (4) that shows the view image generated by the image processing unit (3), wherein
the image processing unit (3) can generate, as the view images, a first view image that is acquired when a first direction is seen from the virtual viewpoint and a second view image that is acquired when a second direction differing from the first direction is seen from the virtual viewpoint, and
each of the first view image and the second view image is shown at a horizontal angle of view that corresponds to a stable visual field during gazing.

2. The vehicular display system (1) according to claim 1, wherein
the horizontal angle of view of each of the first view image and the second view image is set within a range of 85 degrees to 95 degrees, in particular to approximately 90 degrees.

3. The vehicular display system (1) according to claim 2, wherein
a perpendicular angle of view of each of the first view image and the second view image is set to be equal to or larger than 40 degrees and equal to or smaller than 70 degrees, in particular to approximately 45 degrees.

4. The vehicular display system (1) according to any one of claims 1 to 3, wherein
the image processing unit generates, as the first view image, an image that is acquired when an area behind the vehicle is seen from the virtual viewpoint and, as the second view image, an image that is acquired when an area in front of the vehicle is seen from the virtual viewpoint.

5. The vehicular display system (1) according to claim 4, wherein
the imaging unit includes: a rear camera (2b) that captures an image of the area behind the vehicle; a front camera (2a) that captures an image of the area in front of the vehicle; a left camera (2c) that captures an image of an area on a left side of the vehicle; and a right camera (2d) that captures an image of an area on a right side of the vehicle, and
the image processing unit generates the first view image on the basis of the images captured by the rear camera (2b), the left camera (2c), and the right camera (2d) and generates the second view image on the basis of the images captured by the front camera (2a), the left camera (2c), and the right camera (2d).

6. The vehicular display system (1) according to any one of claims 1 to 5, wherein
the virtual viewpoint is set at a position that corresponds to a driver's head in a longitudinal direction and a vertical direction of the vehicle.

7. The vehicular display system (1) according to claim 5, wherein a vehicle speed sensor (SN1), a shift position sensor (SN2) and a view switch (SW1) are electrically connected to the image processing unit (3), wherein the vehicle speed sensor (SN1) detects a travel speed of the vehicle, the shift position sensor (SN2) detects a shift position of an automatic transmission provided in the vehicle and the view switch (SW1) is used to determine whether display of the view image by the display unit (4) is permitted.

8. The vehicular display system (1) according to claim 7, wherein the display unit (4) automatically shows the first view image when the detected travel speed is equal to or lower a threshold speed and the shift position sensor (SN2) detects the automatic transmission shifted in R-position; and the display unit (4) automatically shows the second view image when the detected travel speed is equal to or lower a threshold speed, the shift position sensor (SN2) detects the automatic transmission shifted in D-position and the view switch (SW1) is operated.

9. The vehicular display system (1) according to any of the preceding claims, wherein the image processing unit 3 includes
an image extraction section (32) configured to execute processing to extract the images captured by the cameras (2a to 2d) within a required range,
an image conversion section (33) configured to execute viewpoint conversion processing while synthesizing the images, which are captured by the cameras and extracted by the image extraction section (32).

10. The vehicular display system (1) according to claim 9, wherein the processing unit (3) further comprises
an icon setting section (34) configured to execute processing to set an own vehicle icon (G) shown in superimposed manner on the view image and
a display control section being configured to execute processing to show the view image on the vehicle display unit (4).

11. The vehicular display system (1) according to any of claims 9 or 10, wherein the image conversion section (33) is configured to set a projection surface (P) including the vehicle, in particular with a center of the projection surface (P) matching the vehicle center (C) in a plan view.

12. The vehicular display system (1) according to claim 11, wherein the projection surface (P) is formed by a plane projection surface (P1) with a stereoscopic projection surface (P2) elevated from the outer circumference of the plane projection surface (P1), and wherein the diameter of the stereoscopic projection surface (P2) increases with a specified curvature.

13. The vehicular display system (1) according to any of claim 11 and 12, wherein the image conversion section (33) is further configured to synthesize the images captures by different cameras and to execute the viewpoint conversion processing to project the synthesized image to an area which is part of the projection surface (P) with the virtual viewpoint (V) as the projection center.

14. A vehicle comprising a vehicular display system (1) according to any of the preceding claims.

15. A method of showing an image of a surrounding area of a vehicle by use of a vehicular display system (1) mounted on the vehicle, in particular by use of a vehicular display system (1) according to any of the preceding claims 1 to 13, including the steps of:
capturing an image of the surrounding area of the vehicle by an imaging unit (2);
converting the image captured by the imaging unit (2) into a view image by an image processing unit (3), wherein the view image is an image of the area seen from a predetermined virtual viewpoint in a cabin of the vehicle; and
showing the view image generated by the image processing unit (3)by a display unit (4), wherein
the image processing unit (3) generates, as the view images, a first view image that is acquired when a first direction is seen from the virtual viewpoint and a second view image that is acquired when a second direction differing from the first direction is seen from the virtual viewpoint, and
each of the first view image and the second view image is shown at a horizontal angle of view that corresponds to a stable visual field during gazing.
